# EUROPEAN PATENT APPLICATION

(11) **EP 4 568 330 A1**
(43) Date of publication of application: **11.06.2025**
(21) Application number: 23870249.2
(22) Date of filing: 07.09.2023
(51) Int. Cl.: H04W 24/08

(54) **COMMUNICATION CONTROL METHOD, AND READABLE MEDIUM, PROGRAM PRODUCT AND ELECTRONIC DEVICE**

(30) Priority: 27.09.2022 CN 202211183766
(71) Applicant: Huawei Technologies Co., Ltd., Shenzhen, Guangdong 518129 (CN)
(72) Inventor: ZHANG, Shenyun, Shenzhen, Guangdong 518129 (CN); WANG, Weifang, Shenzhen, Guangdong 518129 (CN)
(74) Representative: MERH-IP Matias Erny Reichl Hoffmann Patentanwälte PartG mbB
(86) International application number: PCT/CN2023/117526
(87) International publication number: WO 2024/067010

(57) **Abstract**

This application relates to the field of communication technologies, and discloses a communication control method, a readable medium, a program product, and an electronic device. When user equipment does not receive a network-side CDRX configuration parameter from a network-side device, or power consumption corresponding to a received network-side CDRX configuration parameter is higher than a local CDRX configuration parameter, the user equipment may detect whether a use status of the user equipment meets a condition for enabling the local CDRX configuration parameter. If determining that the use status of the user equipment meets the condition for enabling the local CDRX configuration parameter, the user equipment periodically suspends listening to a PDCCH between the user equipment and the network-side device based on the local CDRX configuration parameter. In this way, even if the network-side CDRX configuration parameter is not set for the network-side device, the user equipment can periodically suspend listening to the PDCCH between the user equipment and the network-side device based on the local CDRX configuration parameter. This helps reduce power consumption of the user equipment and improve battery life of the user equipment.

## Description

This application claims priority to Chinese Patent Application No. 202211183766.9, filed with the China National Intellectual Property Administration on September 27, 2022 and entitled "COMMUNICATION CONTROL METHOD, READABLE MEDIUM, PROGRAM PRODUCT, AND ELECTRONIC DEVICE", which is incorporated herein by reference in its entirety.

### TECHNICAL FIELD

This application relates to the field of communication technologies, and in particular, to a communication control method, a readable medium, a program product, and an electronic device.

### BACKGROUND

In a mobile communication system, user equipment (user equipment, UE) can perform a communication service through a network-side device only after establishing a radio resource control (radio resource control, RRC) connection to the network-side device. To reduce power consumption, the UE may periodically suspend listening to a physical downlink control channel (physical downlink control channel, PDCCH) between the UE and the network-side device based on a connected discontinuous reception (connected discontinuous reception, CDRX) configuration parameter received from the network-side device. However, currently, a network-side CDRX configuration parameter is not configured for some network-side devices, that is, the network-side CDRX configuration parameter is not sent to the UE. In addition, according to the 3rd generation partnership project (3rd Generation Partnership Project, 3GPP) 36.321 protocol specification, when not receiving the network-side CDRX configuration parameter from the network-side device, the UE continuously listens to the PDCCH after establishing the RRC connection to the network-side device, but cannot enter a CDRX mode. This increases power consumption of the UE.

### SUMMARY

In view of this, embodiments of this application provide a communication control method, a readable medium, a program product, and an electronic device. When not receiving a network-side CDRX configuration parameter sent by a network-side device, the user equipment may listen to a PDCCH based on a local CDRX configuration parameter. This helps reduce power consumption of the UE.

According to a first aspect, an embodiment of this application provides a communication control method, which is applied to user equipment. The method includes: establishing, by the user equipment, a first radio resource control connection to a network-side device; determining that the user equipment does not receive a connected discontinuous reception configuration parameter from the network-side device; and when a use status of the user equipment meets a first condition, periodically suspending listening to a physical downlink control channel based on a first parameter.

According to the method, when not receiving the connected discontinuous reception configuration parameter (for example, a network-side CDRX configuration parameter in the following) from the network-side device, the user equipment may periodically suspend listening to the physical downlink control channel based on the first parameter (for example, a local CDRX configuration parameter in the following). This helps reduce power consumption of the user equipment.

Optionally, the first parameter may be prestored in the user equipment, or may be obtained by the user equipment from a cloud server, or may be obtained, based on the use status of the user equipment, by the user equipment through real-time calculation.

In a possible implementation of the first aspect, the first parameter is prestored in the user equipment.

In a possible implementation of the first aspect, the first condition includes: a performance mode is not enabled for the user equipment, a foreground application run by the user equipment does not include a preset application, and an amount of data transmitted by the user equipment within preset duration is less than a preset amount of data.

According to the method, the user equipment listens to the PDCCH based on the first parameter only when the performance mode is not enabled, the foreground application run by the user equipment does not include the preset application, and the amount of data transmitted by the user equipment within the preset duration is less than the preset amount of data. When an application scenario of the user equipment is a scenario in which there is a high requirement on a delay (that is, a small delay value is required), this can avoid affecting, due to listening to the PDCCH based on the first parameter, normal use by a user, which helps improve user experience.

In a possible implementation of the first aspect, the first parameter includes a long discontinuous reception cycle LCD, an on duration OD timer, and an inactivity timer IAT.

In a possible implementation of the first aspect, the periodically suspending listening to a physical downlink control channel based on a first parameter includes: periodically suspending listening to the physical downlink control channel by using the long discontinuous reception cycle LCD as a cycle, where duration for listening to the physical downlink control channel in each cycle is the on duration OD timer.

In a possible implementation of the first aspect, the method further includes: during periodical suspension, based on the first parameter, of listening to the physical downlink control channel, detecting whether network congestion occurs on the user equipment; and when network congestion occurs on the user equipment, switching to periodically suspending listening to the physical downlink control channel based on a second parameter, where the second parameter meets at least one of the following conditions:
a ratio of an on duration OD timer to a long discontinuous reception cycle LCD in the second parameter is greater than a ratio of the on duration OD timer to the long discontinuous reception cycle LCD in the first parameter;
the long discontinuous reception cycle LCD in the second parameter is less than the long discontinuous reception cycle LCD in the first parameter; and
a ratio of the on duration OD timer to an inactivity timer IAT in the second parameter is greater than a ratio of the on duration OD timer to the inactivity timer IAT in the first parameter.

According to the method, when the user equipment listens to the PDCCH based on the first parameter, if network congestion occurs, the user equipment may update the first parameter to the second parameter, to listen to the PDCCH. This can avoid affecting normal use by the user in an application scenario in which the first parameter is not suitable for the user equipment, which helps improve user experience.

In a possible implementation of the first aspect, the first parameter is stored in the user equipment, and the method further includes: during periodical suspension, based on the second parameter, of listening to the physical downlink control channel, detecting that network congestion does not occur on the user equipment; and updating the first parameter stored in the user equipment to the second parameter.

According to the method, the user equipment may update the prestored first parameter to the second parameter, so that when not receiving, next time, the network-side CDRX configuration parameter sent by the network-side device, the user equipment can directly listen to the PDCCH based on the second parameter. This avoids network congestion occurred due to listening to the PDCCH based on the first parameter, which helps improve user experience.

In a possible implementation of the first aspect, the method further includes: establishing, by the user equipment, a second radio resource control connection to the network-side device; determining that the user equipment receives the connected discontinuous reception configuration parameter from the network-side device; and when power consumption corresponding to the received connected discontinuous reception configuration parameter is higher than power consumption corresponding to the first parameter, and the use status of the user equipment meets the first condition, periodically suspending listening to the physical downlink control channel based on the first parameter.

According to the method, when the user equipment receives the connected discontinuous reception configuration parameter sent by the network-side device, but power consumption corresponding to the connected discontinuous reception configuration parameter is higher than power consumption corresponding to the first parameter, the user equipment switches to periodically suspending listening to the physical downlink control channel based on the first parameter. This further helps reduce power consumption of the user equipment.

In a possible implementation of the first aspect, the method further includes: establishing, by the user equipment, a third radio resource control connection to the network-side device; determining that the user equipment receives the connected discontinuous reception configuration parameter from the network-side device; and periodically suspending listening to the physical downlink control channel based on the received connected discontinuous reception configuration parameter, and during periodic suspension, detecting whether network congestion occurs on the user equipment; and when network congestion occurs on the user equipment, and the use status of the user equipment meets the first condition, periodically suspending listening to the physical downlink control channel based on the first parameter.

According to the method, when the user equipment listens to the PDCCH based on the connected discontinuous reception configuration parameter delivered by the network-side device, if network congestion occurs on the user equipment, the user equipment switches to periodically suspending listening to the physical downlink control channel based on the first parameter. This can avoid affecting, due to an improper setting of the connected discontinuous reception configuration parameter delivered by the network-side device, normal use by the user, which helps improve user experience.

In a possible implementation of the first aspect, the user equipment currently runs in a first application scenario, and the first parameter is a connected discontinuous reception configuration parameter corresponding to the first application scenario.

In a possible implementation of the first aspect, the method further includes: detecting that an application scenario of the user equipment is switched from the first application scenario to a second application scenario, and switching to periodically suspending listening to the physical downlink control channel based on a third parameter, where the third parameter is a connected discontinuous reception configuration parameter corresponding to the second application scenario.

According to the method, the user equipment may use different connected discontinuous reception configuration parameters based on different application scenarios of the user equipment, so that power consumption of the user equipment can be further reduced, or network congestion on the user equipment caused by the improper setting of the connected discontinuous reception configuration parameter can be avoided.

In a possible implementation of the first aspect, the first application scenario or the second application scenario is any one of the following application scenarios: a power saving mode scenario, a call scenario, a light traffic scenario, a sleep mode scenario, a display of the user equipment being turned off, a live broadcast scenario, a video scenario, a navigation scenario, and a web page browsing scenario.

According to a second aspect, an embodiment of this application provides an electronic device. The electronic device includes: a memory, configured to store instructions executed by one or more processors of the electronic device; and a processor, where the processor is one of the processors of the electronic device, and is configured to execute the instructions stored in the memory, to enable the electronic device to perform the following operations: establishing a first radio resource control connection to a network-side device; determining that the electronic device does not receive a connected discontinuous reception configuration parameter from the network-side device; and when a use status of the electronic device meets a first condition, periodically suspending listening to a physical downlink control channel based on a first parameter.

When not receiving the connected discontinuous reception configuration parameter (for example, a network-side CDRX configuration parameter in the following) from the network-side device, the electronic device may periodically suspend listening to the physical downlink control channel based on the first parameter (for example, a local CDRX configuration parameter in the following). This helps reduce power consumption of the electronic device.

Optionally, the first parameter may be prestored in the memory of the electronic device, or may be obtained by the electronic device from a cloud server, or may be obtained, based on the use status of the electronic device, by the electronic device through real-time calculation.

In a possible implementation of the second aspect, the first parameter is prestored in the memory.

In a possible implementation of the second aspect, the first condition includes: a performance mode is not enabled for the electronic device, a foreground application run by the electronic device does not include a preset application, and an amount of data transmitted by the electronic device within preset duration is less than a preset amount of data.

The electronic device listens to the PDCCH based on the first parameter only when the performance mode is not enabled, the foreground application run by the electronic device does not include the preset application, and the amount of data transmitted by the electronic device within the preset duration is less than the preset amount of data. When an application scenario of the electronic device is a scenario in which there is a high requirement on a delay (that is, a small delay value is required), this can avoid affecting, due to listening to the PDCCH based on the first parameter, normal use by a user, which helps improve user experience.

In a possible implementation of the second aspect, the first parameter includes a long discontinuous reception cycle LCD, an on duration OD timer, and an inactivity timer IAT.

In a possible implementation of the second aspect, the periodically suspending listening to a physical downlink control channel based on a first parameter includes: periodically suspending listening to the physical downlink control channel by using the long discontinuous reception cycle LCD as a cycle, where duration for listening to the physical downlink control channel in each cycle is the on duration OD timer.

In a possible implementation of the second aspect, the processor is further configured to execute the instructions stored in the memory, to enable the electronic device to perform the following operations: during periodical suspension, based on the first parameter, of listening to the physical downlink control channel, detecting whether network congestion occurs on the electronic device; and when network congestion occurs on the electronic device, switching to periodically suspending listening to the physical downlink control channel based on a second parameter, where the second parameter meets at least one of the following conditions:
a ratio of an on duration OD timer to a long discontinuous reception cycle LCD in the second parameter is greater than a ratio of the on duration OD timer to the long discontinuous reception cycle LCD in the first parameter;
the long discontinuous reception cycle LCD in the second parameter is less than the long discontinuous reception cycle LCD in the first parameter; and
a ratio of the on duration OD timer to an inactivity timer IAT in the second parameter is greater than a ratio of the on duration OD timer to the inactivity timer IAT in the first parameter.

When the electronic device listens to the PDCCH based on the first parameter, if network congestion occurs, the electronic device may update the first parameter to the second parameter, to listen to the PDCCH. This can avoid affecting normal use by the user in an application scenario in which the first parameter is not suitable for the electronic device, which helps improve user experience.

In a possible implementation of the second aspect, the processor is further configured to execute the instructions stored in the memory, to enable the electronic device to perform the following operations: during periodical suspension, based on the second parameter, of listening to the physical downlink control channel, detecting that network congestion does not occur on the electronic device; and updating the first parameter stored in the memory to the second parameter.

The electronic device may update the prestored first parameter to the second parameter, so that when not receiving, next time, the network-side CDRX configuration parameter sent by the network-side device, the electronic device can directly listen to the PDCCH based on the second parameter. This avoids network congestion occurred due to listening to the PDCCH based on the first parameter, which helps improve user experience.

In a possible implementation of the second aspect, the processor is further configured to execute the instructions stored in the memory, to enable the electronic device to perform the following operations: establishing a second radio resource control connection to the network-side device; determining that the electronic device receives the connected discontinuous reception configuration parameter from the network-side device; and when power consumption corresponding to the received connected discontinuous reception configuration parameter is higher than power consumption corresponding to the first parameter, and the use status of the electronic device meets the first condition, periodically suspending listening to the physical downlink control channel based on the first parameter.

When the electronic device receives the connected discontinuous reception configuration parameter sent by the network-side device, but power consumption corresponding to the connected discontinuous reception configuration parameter is higher than power consumption corresponding to the first parameter, the electronic device switches to periodically suspending listening to the physical downlink control channel based on the first parameter. This further helps reduce power consumption of the electronic device.

In a possible implementation of the second aspect, the processor is further configured to execute the instructions stored in the memory, to enable the electronic device to perform the following operations: establishing a third radio resource control connection to the network-side device; determining that the electronic device receives the connected discontinuous reception configuration parameter from the network-side device; periodically suspending listening to the physical downlink control channel based on the received connected discontinuous reception configuration parameter, and during periodic suspension, detecting whether network congestion occurs on the electronic device; and when network congestion occurs on the electronic device, and the use status of the electronic device meets the first condition, periodically suspending listening to the physical downlink control channel based on the first parameter.

When the electronic device listens to the PDCCH based on the connected discontinuous reception configuration parameter delivered by the network-side device, if network congestion occurs on the electronic device, the electronic device switches to periodically suspending listening to the physical downlink control channel based on the first parameter. This can avoid affecting, due to an improper setting of the connected discontinuous reception configuration parameter delivered by the network-side device, normal use by the user, which helps improve user experience.

In a possible implementation of the second aspect, the electronic device currently runs in a first application scenario, and the first parameter is a connected discontinuous reception configuration parameter corresponding to the first application scenario.

In a possible implementation of the second aspect, the processor is further configured to execute the instructions stored in the memory, to enable the electronic device to perform the following operations: detecting that an application scenario of the electronic device is switched from the first application scenario to a second application scenario, and switching to periodically suspending listening to the physical downlink control channel based on a third parameter, where the third parameter is a connected discontinuous reception configuration parameter corresponding to the second application scenario.

The electronic device may use different connected discontinuous reception configuration parameters based on different application scenarios of the electronic device, so that power consumption of the electronic device can be further reduced, or network congestion on the electronic device caused by the improper setting of the connected discontinuous reception configuration parameter can be avoided.

In a possible implementation of the second aspect, the first application scenario or the second application scenario is any one of the following application scenarios: a power saving mode scenario, a call scenario, a light traffic scenario, a sleep mode scenario, a display of the electronic device being turned off, a live broadcast scenario, a video scenario, a navigation scenario, and a web page browsing scenario.

According to a third aspect, an embodiment of this application provides a readable storage medium. The readable storage medium stores instructions. When the instructions are executed on an electronic device, the electronic device is enabled to implement the communication control method provided in the first aspect and any one of the possible implementations of the first aspect.

According to a fourth aspect, an embodiment of this application provides a computer program product. When the computer program product runs on an electronic device, the electronic device is enabled to implement the communication control method provided in the first aspect and any one of the possible implementations of the first aspect.

### BRIEF DESCRIPTION OF DRAWINGS

FIG. 1A is a diagram in which UE 10 listens to a PDCCH between the UE 10 and a network-side device 20 in a CDRX mode according to some embodiments of this application;
FIG. 1B is a diagram in which UE 10 continuously listens to a PDCCH between the UE 10 and a network-side device 20 according to some embodiments of this application;
FIG. 2 is a diagram of a local CDRX configuration parameter according to some embodiments of this application;
FIG. 3 is a diagram of a time sequence in which UE 10 continuously listens to a PDCCH after obtaining a PDCCH signal through listening according to some embodiments of this application;
FIG. 4 is a schematic flowchart of a communication control method according to some embodiments of this application;
FIG. 5 is a schematic flowchart of another communication control method according to some embodiments of this application;
FIG. 6 is a schematic flowchart of still another communication control method according to some embodiments of this application;
FIG. 7A and FIG. 7B are a schematic flowchart of yet another communication control method according to some embodiments of this application;
FIG. 8 is a diagram of a structure of a communication control apparatus 30 according to some embodiments of this application; and
FIG. 9 is a diagram of a structure of a mobile phone 10 according to some embodiments of this application.

### DESCRIPTION OF EMBODIMENTS

Illustrative embodiments of this application include but are not limited to a communication control method, a readable medium, a program product, and an electronic device.

It may be understood that UE may be any electronic device that can perform mobile communication, and includes but is not limited to a mobile phone, a laptop computer, a tablet computer, a wearable device, a head-mounted display, a mobile email device, a portable game console, a portable music player, a reader device, an in-vehicle infotainment system, customer premises equipment (customer premises equipment, CPE), a smart home device, an Internet of Things device, and the like.

It may be understood that a network-side device may be any electronic device that can provide mobile communication access for the UE, and includes but is not limited to a device independently disposed on a radio access network (radio access network, RAN) side, for example, a base station and a radio network controller (radio network controller, RNC), and a functional module of the foregoing various devices on the radio access network side.

The following describes the technical solutions in embodiments of this application with reference to the accompanying drawings.

As described above, the UE may periodically suspend listening to a PDCCH between the UE and the network-side device by receiving a network-side CDRX configuration parameter from the network-side device, to reduce power consumption.

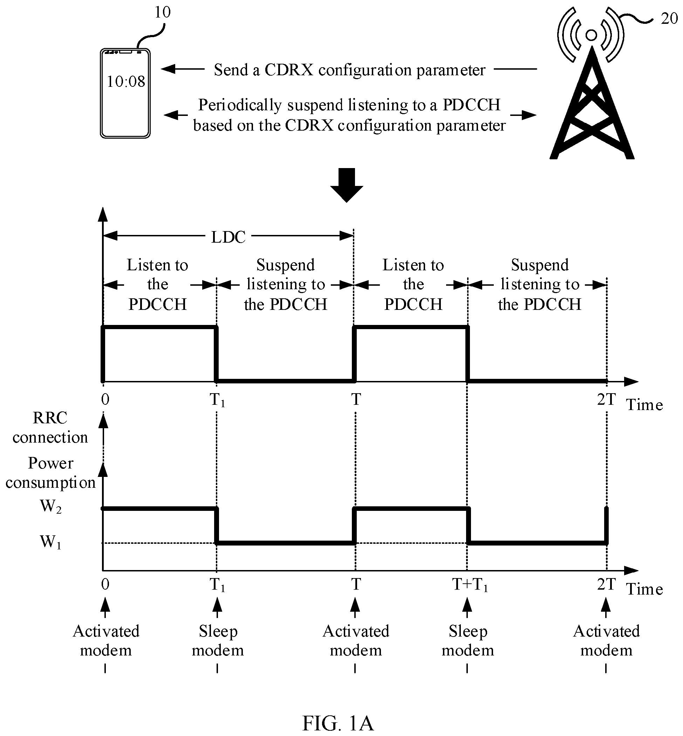

Specifically, FIG. 1A is a diagram in which UE 10 listens to a PDCCH between the UE 10 and a network-side device 20 in a CDRX mode according to some embodiments of this application.

As shown in FIG. 1A, after the UE 10 camps on a cell corresponding to the network-side device 20, the network-side device 20 may send the CDRX configuration parameter to the UE 10, so that after establishing an RRC connection to the network-side device 20, the UE 10 may periodically suspend listening to the PDCCH between the UE 10 and the network device 20 based on the received CDRX configuration parameter.

It may be understood that the CDRX configuration parameter may include a long discontinuous reception cycle (long DRX cycle, LDC) that indicates a cycle in which the UE 10 listens to or suspends listening to the PDCCH, an on duration (on duration, OD) timer that indicates duration in which the UE 10 listens to the PDCCH in one LDC, and an inactivity timer (inactivity timer, IAT) that indicates duration in which the UE 10 continues to listen to the PDCCH after obtaining a PDCCH signal through listening.

For example, with reference to FIG. 1A, the LDC may be T, and the OD timer may be T₁. Therefore, the UE 10 listens to the PDCCH between the UE 10 and the network device 20 in a cycle from 0 to T₁ in each LDC, and suspends listening to the PDCCH between the UE 10 and the network device 20 in a cycle from T₁ to T in each LDC. As shown in FIG. 1A, it is assumed that power consumption is W₂ when the UE 10 listens to the PDCCH between the UE 10 and the network device 20 (for example, a cycle from 0 to T₁ and a cycle from T to T+T₁). Because a modem (modem) of the UE 10 may be set to be in a sleep mode when the UE 10 suspends listening to the UE 10 and the network device 20 (for example, a cycle from T₁ to T and a cycle from T+T₁ to 2T), power consumption W₁ is lower than W₂ when the UE 10 suspends listening to the PDCCH between the UE 10 and the network device 20. That is, in the CDRX configuration parameter, a larger ratio of the OD timer to the LDC indicates higher power consumption of the UE 10, and correspondingly, a network delay is lower; and a smaller ratio of the OD timer to the LDC indicates lower power consumption of the UE 10, and correspondingly, a network delay is higher.

It may be understood that in some other embodiments, the CDRX configuration parameter may further include more or fewer parameters. This is not limited herein.

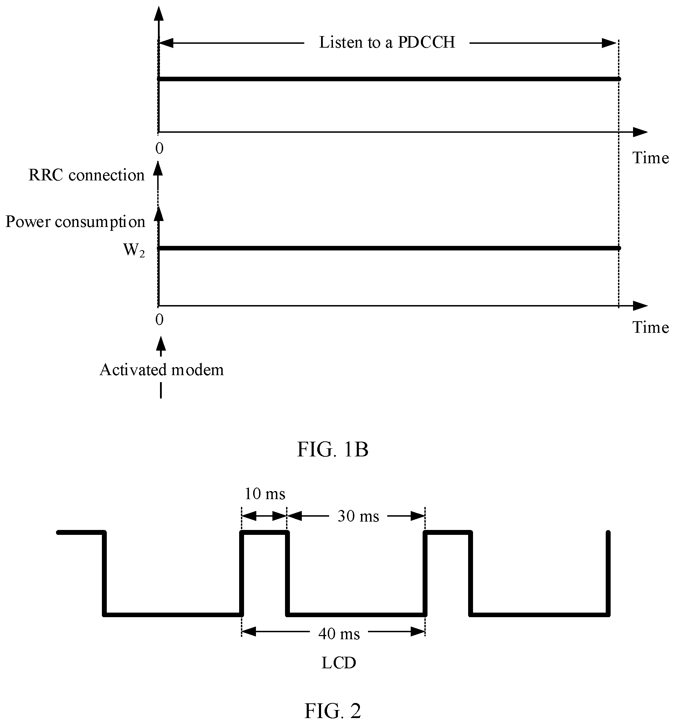

However, if the CDRX configuration parameter is not set for the network-side device 20, the network-side device 20 does not send the CDRX configuration parameter to the UE 10. Refer to FIG. 1B. According to the 3GPP 36.321 protocol specification, after establishing the RRC connection to the network-side device 20, the UE 10 continuously listens to the PDCCH between the UE 10 and the network device 20. In other words, the UE 10 cannot enable a CDRX function, and high power consumption W₂ is kept, which affects battery life of the UE 10.

In view of this, an embodiment of this application provides a communication control method. At least one group of local CDRX configuration parameters (that is, a CDRX configuration parameter stored in the UE 10) is preset in the UE 10. When not receiving the network-side CDRX configuration parameter (that is, the CDRX configuration parameter received from the network-side device) from the network-side device 20, the UE 10 may detect whether a use status of the UE 10 meets a condition for enabling the local CDRX configuration parameter. If determining that the use status of the UE 10 meets the condition for enabling the local CDRX configuration parameter, the UE 10 periodically suspends listening to the PDCCH between the UE 10 and the network-side device 20 based on the local CDRX configuration parameter. In this way, even if the network-side CDRX configuration parameter is not set for the network-side device 20, the UE 10 may alternatively periodically suspend listening to the PDCCH between the UE 10 and the network-side device 20 based on the local CDRX configuration parameter. This helps reduce power consumption of the UE 10 and improve battery life of the UE 10.

It may be understood that the condition for enabling the local CDRX configuration parameter indicates that an application run by the UE 10 or a service used by the UE 10 has a low requirement on a delay, and periodically suspending listening to the PDCCH based on the local CDRX configuration parameter does not affect use by a user. In some embodiments, the UE 10 may determine, when detecting that a performance mode is not enabled for the UE 10, and the UE 10 is not in a low-delay scenario and is not in a heavy-traffic scenario, that the use status of the UE meets the condition for enabling the local CDRX configuration parameter.

The low-delay scenario is a scenario in which a foreground application run by the UE 10 includes at least one of preset applications. The preset application is an application set by a user, a developer of the UE 10, or the like, and the application requires that during running, a delay between the UE 10 and the network-side device be lower than a preset value. In some embodiments, the preset application may include a game application.

The heavy-traffic scenario is a scenario in which an amount of data transmitted by the UE 10 by using the network-side device 20 within preset duration is greater than a preset amount of data. For example, the UE 10 may detect the amount of data transmitted by the UE 10 by using the network-side device 20 within the preset duration, and determine that the UE 10 is in the heavy-traffic scenario when detecting that the amount of data is greater than the preset amount of data.

It may be understood that the foregoing preset application is determined by the user, the developer of the UE, or the like, and may include the game application or another application preset by the developer or the user.

It may be understood that in some embodiments, the local CDRX configuration parameter may be prestored in the UE 10, or may be obtained by the UE 10 from a server, or may be obtained by the UE 10 through calculation based on the use status of the UE 10. A storage location and an obtaining manner of the local CDRX configuration parameter are not limited in embodiments of this application.

For example, FIG. 2 is a diagram of the local CDRX configuration parameter according to some embodiments of this application.

As shown in FIG. 2, in the local CDRX configuration parameter, the LCD may be 40 ms, the OD timer may be 10 ms, and the IAT may be 80 ms. In this case, if detecting that the use status of the UE 10 meets the condition for enabling the local CDRX configuration parameter, by using 40 ms as a cycle, the UE 10 listens to the PDCCH between the UE 10 and the network-side device 20 for 10 ms in each cycle, and suspends listening to the PDCCH between the UE 10 and the network-side device 20 for 30 ms in each cycle. When listening to the PDCCH, if obtaining the PDCCH signal through listening, the UE 10 continues to continuously listen to the PDCCH for 80 ms, and continues to listen to the PDCCH based on the local CDRX configuration parameter after the 80 ms ends.

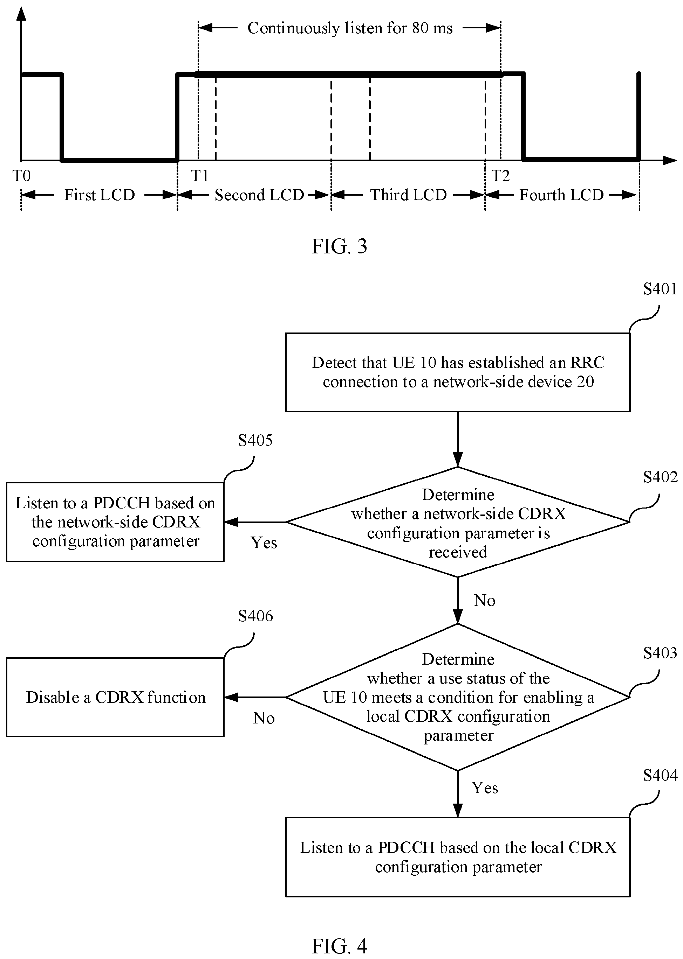

For example, refer to FIG. 3. The UE 10 listens to the PDCCH in four LCD (a first LCD, a second LCD, a third LCD, and a fourth LCD) starting from a moment T0 based on the local CDRX configuration parameter shown in FIG. 2. If obtaining the PDCCH signal through listening at a moment T1 of the second LCD, the UE 10 continues to continuously listen to the PDCCH for 80 ms, and after T1+80 ms (that is, a moment T2), resumes listening in a form of listening to the PDCCH for 10 ms in each LCD. However, because the moment T2 is a moment of a cycle of the OD timer in the fourth LCD, the UE 10 suspends listening to the PDCCH after the cycle of the OD timer in the fourth LCD ends.

In this way, when not obtaining the PDCCH signal through listening, the UE 10 listens to the PDCCH only for a quarter of the time, and the modem may be set to be in a sleep mode in other time, which helps reduce power consumption of the UE 10 and improve battery life of the UE 10.

It may be understood that the local CDRX configuration parameter shown in FIG. 2 is merely an example. In some other embodiments, a CDRX configuration parameter in another form may alternatively be used. This is not limited herein.

The following further describes the technical solutions of this application with reference to the accompanying drawings.

FIG. 4 is a schematic flowchart of a communication control method according to some embodiments of this application. The procedure is executed by the UE 10. As shown in FIG. 4, the procedure includes the following steps.

S401: Detect that the UE 10 has established an RRC connection to the network-side device 20.

When detecting that the RRC connection to the network-side device 20 has been established, the UE 10 triggers the communication control method provided in embodiments of this application.

S402: Determine whether a network-side CDRX configuration parameter is received.

The UE 10 determines whether the network-side CDRX configuration parameter sent by the network-side device 20 is received. If the UE 10 determines that the network-side CDRX configuration parameter is received, it indicates that the UE 10 can listen to a PDCCH between the UE 10 and the network-side device 20 based on the network-side CDRX configuration parameter. In this case, go to step S405. Otherwise, go to step S403 to further determine whether the UE 10 can listen to the PDCCH based on a local CDRX configuration parameter.

S403: Determine whether a use status of the UE 10 meets a condition for enabling the local CDRX configuration parameter.

When not receiving the network-side CDRX configuration parameter, the UE 10 determines whether the use status of the UE 10 meets the condition for enabling the local CDRX configuration parameter. If the UE 10 determines that the use status of the UE 10 meets the condition for enabling the local configuration parameter, it indicates that the UE 10 can listen to the PDCCH between the UE 10 and the network-side device 20 based on the local CDRX configuration parameter. In this case, go to step S404. Otherwise, it indicates that the UE 10 cannot listen to the PDCCH based on the local CDRX configuration parameter. In this case, go to step S406.

For example, in some embodiments, the UE 10 may determine, when a performance mode is not enabled for the UE 10, and the UE 10 is not in a low-delay scenario and is not in a heavy-traffic scenario, that the use status of the UE meets the condition for enabling the local CDRX configuration parameter.

For example, the UE 10 may determine, when detecting that a switch corresponding to the performance mode of the UE 10 is in an off status, that the performance mode is not enabled for the UE 10. For another example, the UE 10 may determine, when the foreground application run by the UE 10 does not include the preset application, that the UE 10 is not in the low-delay scenario. For still another example, when detecting that the amount of data transmitted by the UE 10 within the preset duration is less than or equal to the preset amount of transmitted data, the UE 10 may determine that the UE 10 is not in the heavy traffic scenario.

It may be understood that in some other embodiments, the condition for enabling the local CDRX configuration parameter may alternatively include another condition. This is not limited herein.

S404: Listen to the PDCCH based on the local CDRX configuration parameter.

When determining that the use status of the UE 10 meets the condition for enabling the local CDRX configuration parameter, the UE 10 periodically suspends listening to the PDCCH between the UE 10 and the network-side device 20 based on the local CDRX configuration parameter, for example, the local CDRX configuration parameter shown in FIG. 2.

It may be understood that in some embodiments, when there is only one group of local CDRX configuration parameters, the UE 10 directly listens to the PDCCH based on the group of CDRX configuration parameters.

It may be understood that in some other embodiments, different local CDRX configuration parameters may be further set for the UE 10 for different application scenarios, so that the local CDRX configuration parameters are more suitable for delay requirements in different application scenarios. Therefore, if an application scenario of the UE 10 has a lower delay requirement (that is, a higher delay value is required), a lower ratio of an OD timer to an LCD in the local CDRX configuration parameter indicates lower power consumption of the UE 10.

For example, the application scenario of the UE 10 may include but is not limited to the following scenario: a scenario in which a power saving mode is enabled for the UE 10, or a scenario in which the UE 10 is for a call, or a scenario in which traffic of the UE 10 is light (that is, a scenario in which the amount of data transmitted by the UE 10 by using the network-side device 20 within the preset duration is less than or equal to the preset amount of data), or a scenario in which a power saving mode is disabled but a sleep mode is enabled for the UE 10, or a scenario in which a display of the UE 10 is turned off, or a scenario in which the UE 10 is for live broadcast (for example, the foreground application run by the UE 10 is a live broadcast application), a scenario in which the UE 10 is for a video (for example, the foreground application run by the UE 10 is a video playback application), or a scenario in which the UE 10 is for navigation (for example, the foreground application run by the UE 10 is a map application), or a scenario in which the UE 10 is for browsing a web page (for example, the foreground application run by the UE 10 is a browser application).

Based on the foregoing application scenarios, different local CDRX configuration parameters may be set for the UE 10 for different application scenarios. Then, when determining that the use status of the UE 10 meets the condition for enabling the local CDRX configuration parameter, the UE 10 may first determine the application scenario corresponding to the UE 10, and then listen to the PDCCH based on a local CDRX configuration parameter corresponding to the determined application scenario. For example, in comparison with the local CDRX configuration parameter shown in FIG. 2, in the web page browsing or navigation scenario, shorter duration of the OD timer, for example, 8 ms, may be used, to further reduce the power consumption of the UE 10; in the scenario in which the display of the UE 10 is turned off, more extreme duration of the OD timer, for example, set to 3 ms, may be used, to further reduce the power consumption of the UE 10; in the call, live broadcast, or video scenario, duration of the LCD may be shortened, for example, shortened to 30 ms, to avoid call, video, or live broadcast freezing, to improve user experience; and in the light-traffic scenario, duration of the OD timer may be set to 5 ms, to further reduce the power consumption of the UE 10.

It may be understood that the duration of the OD timer or the duration of the LCD that corresponds to the foregoing scenarios is merely an example. In some other embodiments, other duration of the OD timer or other duration of the LCD may alternatively be used. This is not limited herein.

It may be understood that in some embodiments, when listening to the PDCCH based on the local CDRX configuration parameter, the UE 10 may further detect a change of the use status of the UE 10, and disables the CDRX function when detecting that the use status of the UE 10 does not meet the condition for enabling the local CDRX configuration parameter. For example, when listening to the PDCCH based on the local CDRX configuration parameter, if detecting that the foreground application run by the UE 10 includes the preset application, or the amount of data transmitted by the UE 10 within the preset duration is greater than the preset amount of data, or the performance mode of the UE 10 is enabled, the UE 10 disables the CDRX function of the UE 10, to continuously listen to the PDCCH.

S405: Listen to the PDCCH based on the network-side CDRX configuration parameter.

When determining that the network-side CDRX configuration parameter sent by the network-side device 20 is received, the UE 10 listens to the PDCCH between the UE 10 and the network-side device 20 based on the received network-side CDRX configuration parameter.

S406: Disable the CDRX function.

When determining that the network-side CDRX configuration parameter is not received, and the use status of the UE 10 does not meet the condition for enabling the local CDRX configuration parameter, the UE 10 disables the CDRX function of the UE 10, to continuously listen to the PDCCH between the UE 10 and the network-side device 20.

According to the method provided in embodiments of this application, when not receiving the network-side CDRX configuration parameter sent by the network-side device 20, the UE 10 can periodically suspend listening to the PDCCH between the UE 10 and the network-side device 20 based on the local CDRX configuration parameter. This helps reduce power consumption of the UE 10 and improve battery life of the UE 10.

It may be understood that in some embodiments, when listening to the PDCCH based on a local CDRX configuration parameter corresponding to one of the foregoing application scenarios, the UE 10 may further detect a change of the application scenario of the UE 10, and after detecting the change of the application scenario of the UE 10, switch to listening to the PDCCH based on a local CDRX configuration parameter corresponding to a changed application scenario. For example, it is assumed that when a user browses a web page, the UE 10 listens to the PDCCH based on "LCD=40 ms, OD timer=3 ms, IAT=80 ms". When detecting that the user opens a video on the web page, the UE 10 may switch to listening to the PDCCH based on "LCD=30 ms, OD timer=10 ms, IAT=80 ms".

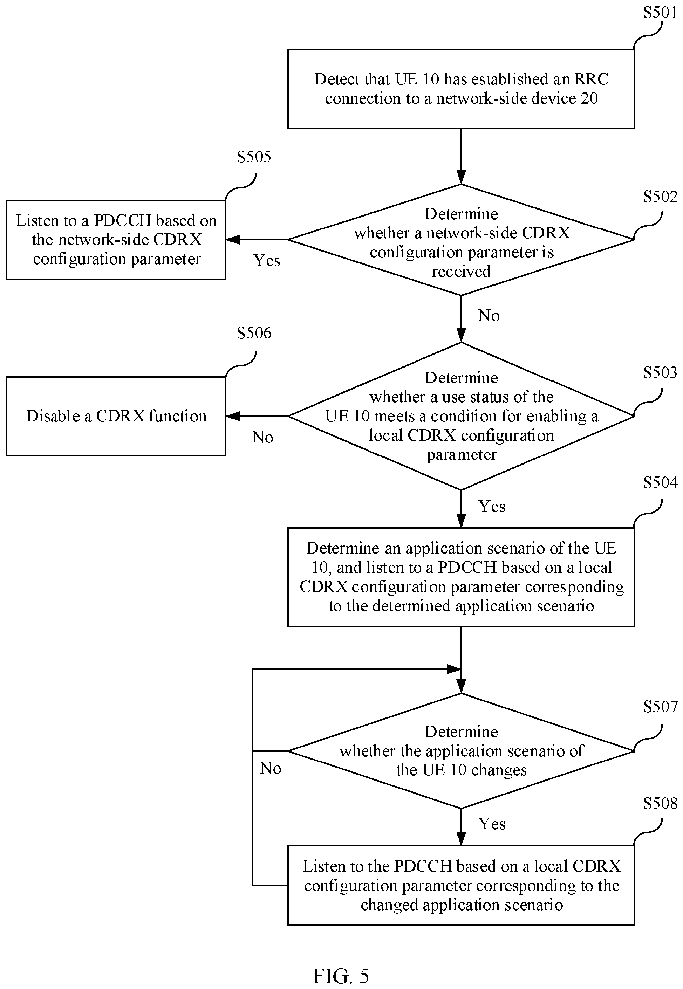

Specifically, FIG. 5 is a schematic flowchart of another communication control method according to some embodiments of this application. The procedure is performed by the UE 10. As shown in FIG. 5, the procedure includes the following step S501 to step S508. For step S501 to step S503, refer to the foregoing step S401 to step S403. For step S505 and step S506, refer to the foregoing step S405 and step S406. Details are not described herein again. The following describes step S504, step S507, and step S508 that are different from the embodiment shown in FIG. 4.

S504: Determine an application scenario of the UE 10, and listen to a PDCCH based on a local CDRX configuration parameter corresponding to the determined application scenario.

When determining that a use status of the UE 10 meets a condition for enabling the local CDRX configuration parameter, the UE 10 may first determine the use scenario of the UE 10, and then listen to the PDCCH based on the local CDRX configuration parameter corresponding to the determined application scenario.

For example, if determining that the UE 10 is in the foregoing web page browsing scenario, the UE 10 may listen to the PDCCH based on the local CDRX configuration parameter "LCD=40 ms, OD timer=3 ms, and IAT=80 ms" corresponding to the web page browsing scenario.

S507: Determine whether the application scenario of the UE 10 changes.

When listening to the PDCCH based on the local CDRX configuration parameter corresponding to the determined application scenario, the UE 10 may determine whether the application scenario of the UE 10 changes. If the application scenario of the UE 10 changes, it indicates that the currently used local CDRX configuration parameter may not be applicable to the changed application scenario. In this case, go to step S508. Otherwise, repeat step S507 to continue determination.

S508: Listen to the PDCCH based on a local CDRX configuration parameter corresponding to the changed application scenario.

After determining that the application scenario of the UE 10 changes, the UE 10 may listen to the PDCCH based on the local CDRX configuration parameter corresponding to the changed application scenario.

For example, when listening to the PDCCH based on a local CDRX configuration parameter corresponding to the foregoing web page browsing scenario, if detecting that the user opens a video on a web page, the UE 10 may switch to listening to the PDCCH based on the local CDRX configuration parameter "LCD=30 ms, OD timer=10 ms, IAT=80 ms" corresponding to the video scenario.

According to the method provided in embodiments of this application, when detecting that the application scenario of the UE 10 changes, the UE 10 may switch the local CDRX configuration parameter in time, to avoid affecting user experience.

It may be understood that in some embodiments, if network congestion occurs on the UE 10 after the UE 10 uses the local CDRX configuration parameter, the UE 10 may adjust the local CDRX configuration parameter, for example, increasing a ratio of an OD timer to an LCD, decreasing an LCD, or increasing a ratio of an OD timer to an IAT, to avoid affecting normal use of the UE 10 by the user and help improve user experience.

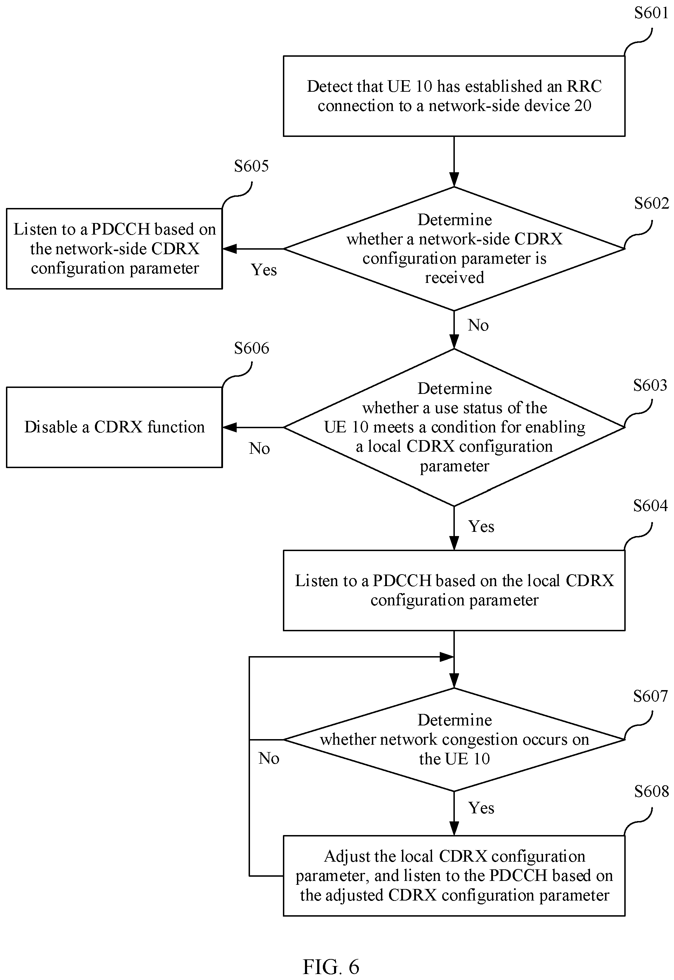

Specifically, FIG. 6 is a schematic flowchart of still another communication control method according to some embodiments of this application. The procedure is performed by the UE 10. As shown in FIG. 6, the procedure includes the following step S601 to step S608. For step S601 to step S606, refer to the foregoing step S401 to step S406. Details are not described herein again. The following describes step S607 and step S608 that are different from the embodiment shown in FIG. 6.

S607: Determine whether network congestion occurs on the UE 10.

After listening to a PDCCH based on a local CDRX configuration parameter, the UE 10 may determine whether network congestion occurs on the UE 10. If the UE 10 determines that network congestion occurs on the UE 10, it indicates that the local CDRX configuration parameter currently used by the UE 10 is not suitable for a current use status of the UE 10. In this case, go to step S608. Otherwise, repeat step S607 to continue determination.

For example, in some embodiments, when detecting that any one of the following cases occurs on the UE 10, the UE 10 may determine that network congestion occurs on the UE 10: a data retransmission rate is greater than a preset retransmission rate; round-trip time (round-trip time, RTT) of first packet data based on a transmission control protocol (transmission control protocol, TCP) exceeds preset RTT; a web page access delay exceeds a preset web page access delay; there is no response to an access failure; a domain name system (domain name system, DNS) request fails for a plurality of consecutive times, or delays of a plurality of requests exceed a preset DNS request delay; reference signal received quality (reference signal received quality, RSRQ) is less than a preset quality value; a signal to interference plus noise ratio (signal to interference plus noise ratio, SINR) is less than a preset plus noise ratio; a transmission delay is higher than a preset delay; and a transmission rate of the UE 10 is less than a preset rate.

It may be understood that in some embodiments, the UE 10 may alternatively determine, in another manner, whether network congestion occurs on the UE 10. This is not limited herein.

S608: Adjust the local CDRX configuration parameter, and listen to the PDCCH based on the adjusted CDRX configuration parameter.

When determining that network congestion occurs on the UE 10, the UE 10 adjusts the local CDRX configuration parameter, and listens to the PDCCH based on the adjusted CDRX configuration parameter.

For example, the UE 10 may increase duration of an OD timer in the local CDRX configuration parameter and reduce duration of an LCD, to increase frequency and duration of listening to the PDCCH by the UE 10, thereby reducing a delay between the UE 10 and the network-side device 20. For example, when the local CDRX configuration parameter shown in FIG. 2 is used to listen to the PDCCH, if network congestion occurs on the UE 10, the OD timer may be increased to 20 ms and/or the LCD may be reduced to 30 ms for the UE 10, to increase the frequency and duration of listening to the PDCCH by the UE 10, thereby reducing the delay between the UE 10 and the network-side device 20.

It may be understood that in some embodiments, when the UE 10 adjusts the local CDRX configuration parameter, and listens to the PDCCH based on the adjusted CDRX configuration parameter, network congestion does not occur on the UE 10. The UE 10 may alternatively update the stored local CDRX configuration parameter to the adjusted local CDRX configuration parameter, so that the UE 10 can directly listen to the PDCCH based on the adjusted CDRX configuration parameter next time.

According to the method provided in embodiments of this application, when not receiving the network-side CDRX configuration parameter sent by the network-side device 20, the UE 10 can periodically suspend listening to the PDCCH between the UE 10 and the network-side device 20 based on the local CDRX configuration parameter. This helps reduce power consumption of the UE 10 and improve battery life of the UE 10. In addition, if network congestion occurs on the UE 10 after the UE 10 uses the local CDRX configuration parameter, the UE 10 may alternatively adjust the local CDRX configuration parameter, for example, increasing a ratio of an OD timer to an LCD, decreasing an LCD, or increasing a ratio of an OD timer to an IAT, to avoid affecting normal use of the UE 10 by the user and help improve user experience.

In the embodiments shown in FIG. 4 to FIG. 6, when receiving the network-side CDRX configuration parameter from the network-side device 20, the UE 10 listens to the PDCCH based on the network-side CDRX configuration parameter. In some other embodiments, if the UE 10 receives the network-side CDRX configuration parameter sent by the network-side device 20, but power consumption corresponding to the network-side CDRX configuration parameter is higher than power consumption corresponding to the local CDRX configuration parameter, power consumption of the UE 10 is further reduced.

In addition, when the UE 10 listens to the PDCCH based on the network-side CDRX configuration parameter, if network congestion occurs on the UE 10, the UE 10 may alternatively switch to listening to the PDCCH based on the local CDRX configuration parameter. This can avoid a case in which user experience of using the UE is affected because the network-side CDRX configuration parameter is not suitable for the use status of the UE 10.

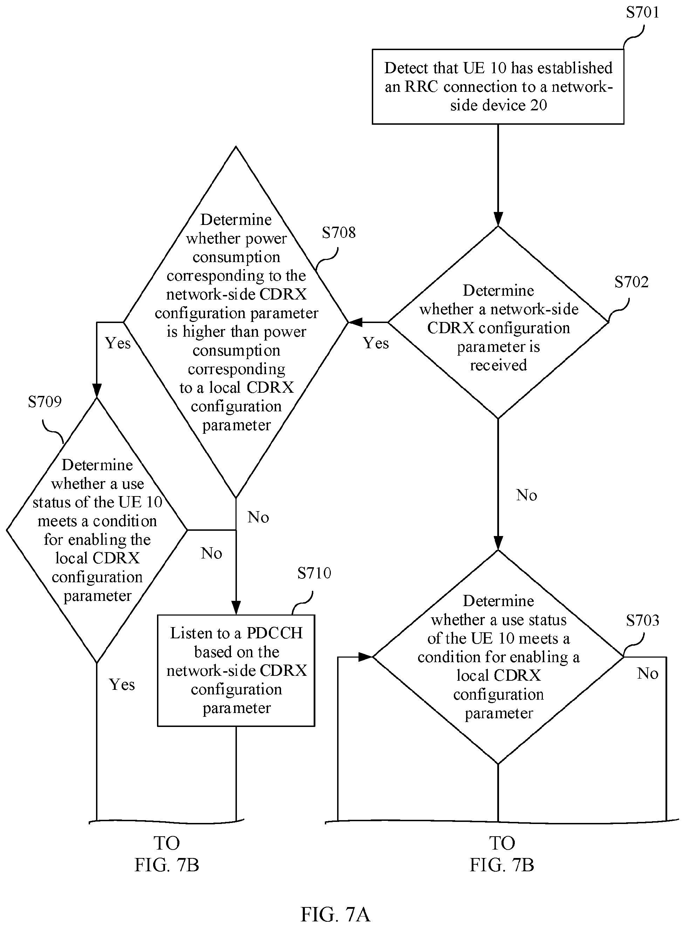

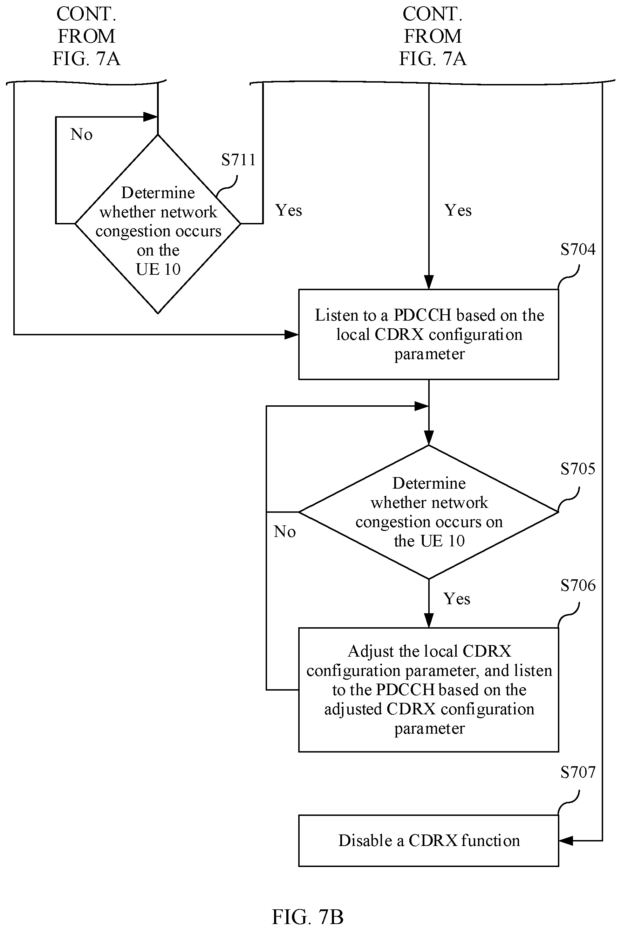

Specifically, FIG. 7A and FIG. 7B are a schematic flowchart of yet another communication control method according to some embodiments of this application. The procedure is executed by the UE 10. As shown in FIG. 7A and FIG. 7B, the procedure includes the following steps.

S701: Detect that the UE 10 has established an RRC connection to the network-side device 20.

When detecting that the RRC connection to the network-side device 20 has been established, the UE 10 triggers the communication control method provided in embodiments of this application.

S702: Determine whether a network-side CDRX configuration parameter is received.

The UE 10 determines whether the network-side CDRX configuration parameter sent by the network-side device 20 is received. If the UE 10 determines that the network-side CDRX configuration parameter is received, it indicates that the UE 10 can listen to the PDCCH between the UE 10 and the network-side device 20 based on the network-side CDRX configuration parameter. In this case, go to step S708 to further determine whether to listen to the PDCCH based on the network-side CDRX configuration parameter. Otherwise, go to step S703 to further determine whether to listen to the PDCCH based on a local CDRX configuration parameter.

S703: Determine whether a use status of the UE 10 meets a condition for enabling the local CDRX configuration parameter.

When not receiving the network-side CDRX configuration parameter, the UE 10 determines whether the use status of the UE 10 meets the condition for enabling the local CDRX configuration parameter. If the UE 10 determines that the use status of the UE 10 meets the condition for enabling the local configuration parameter, it indicates that the UE 10 can listen to the PDCCH between the UE 10 and the network-side device 20 based on the local CDRX configuration parameter. In this case, go to step S704. Otherwise, it indicates that a current use scenario of the UE 10 has a high requirement on a delay (that is, a small delay value is required, for example, less than a preset value). In this case, go to step S707. For a specific determining method, refer to the descriptions of the foregoing step S403. Details are not described herein again.

S704: Listen to the PDCCH based on the local CDRX configuration parameter.

When determining that the use status of the UE 10 meets the condition for enabling the local CDRX configuration parameter, the UE 10 listens to the PDCCH based on the local CDRX configuration parameter. For details, refer to the descriptions of the foregoing step S404. Details are not described herein again.

S705: Determine whether network congestion occurs on the UE 10.

After listening to the PDCCH based on the local CDRX configuration parameter, the UE 10 may determine whether network congestion occurs on the UE 10. If the UE 10 determines that network congestion occurs on the UE 10, it indicates that the local CDRX configuration parameter is not suitable for the use status of the UE 10. In this case, go to step S706. Otherwise, repeat step S705 to continue determination.

It may be understood that for a manner in which the UE 10 determines whether network congestion occurs on the UE 10, refer to the descriptions of the foregoing step S607. Details are not described herein again.

S706: Adjust the local CDRX configuration parameter, and listen to the PDCCH based on the adjusted CDRX configuration parameter.

When determining that network congestion occurs on the UE 10, the UE 10 adjusts the local CDRX configuration parameter, and listens to the PDCCH based on the adjusted CDRX configuration parameter. For a manner of adjusting the local CDRX configuration parameter, refer to related descriptions of the foregoing step S608. Details are not described herein again.

S707: Disable the CDRX function.

When determining that the network-side CDRX configuration parameter is not received, and the use status of the UE 10 does not meet the condition for enabling the local CDRX configuration parameter, the UE 10 disables the CDRX function of the UE 10, to continuously listen to the PDCCH between the UE 10 and the network-side device 20.

S708: Determine whether power consumption corresponding to the network-side CDRX configuration parameter is higher than power consumption corresponding to the local CDRX configuration parameter.

When determining that the network-side CDRX configuration parameter sent by the network-side device 20 is received, the UE 10 determines whether power consumption corresponding to the network-side CDRX configuration parameter is higher than the local CDRX configuration parameter. If the UE 10 determines that power consumption corresponding to the network-side CDRX configuration parameter is higher than the local CDRX configuration parameter, it indicates that power consumption of the UE 10 may be further reduced based on the local CDRX configuration parameter. In this case, go to step S709 to further determine whether the UE 10 can listen to the PDCCH based on the local CDRX configuration parameter. Otherwise, go to step S710.

For example, when a ratio of an OD timer to an LCD in the network-side CDRX configuration parameter is greater than a ratio of an OD timer to an LCD in the local CDRX configuration parameter, the UE 10 may determine that power consumption corresponding to the network-side CDRX configuration parameter is higher than the local CDRX configuration parameter. For example, in the local CDRX configuration parameter shown in FIG. 2, the ratio of the OD timer to the LCD is 10 ms/40 ms=0.25. If the ratio of the OD timer to the LCD in the network-side CDRX configuration parameter is greater than 0.25, it indicates that power consumption corresponding to the network-side CDRX configuration parameter is higher than the local CDRX configuration parameter.

It may be understood that in some embodiments, the UE 10 may alternatively determine, in another manner, whether power consumption corresponding to the network-side CDRX configuration parameter is higher than the local CDRX configuration parameter. This is not limited herein.

S709: Determine whether the use status of the UE 10 meets the condition for enabling the local CDRX configuration parameter.

When determining that power consumption corresponding to the network-side CDRX configuration parameter is higher than the local CDRX configuration parameter, the UE 10 determines whether the use status of the UE 10 meets the condition for enabling the local CDRX configuration parameter. If the UE 10 determines that the use status of the UE 10 meets the condition for enabling the local CDRX configuration parameter, it indicates that the UE 10 can listen to the PDCCH based on the local CDRX configuration parameter. In this case, go to step S704. Otherwise, it indicates that the UE 10 cannot listen to the PDCCH based on the local CDRX configuration parameter. In this case, go to step S710.

It may be understood that for a specific manner in which the UE 10 determines whether the use status of the UE 10 meets the condition for enabling the local CDRX configuration parameter, refer to the descriptions of the foregoing step S403. Details are not described herein again.

S710: Listen to the PDCCH based on the network-side CDRX configuration parameter.

When determining that power consumption corresponding to the network-side CDRX configuration parameter is lower than or equal to power consumption corresponding to the local CDRX configuration parameter, or that power consumption corresponding to the network-side CDRX configuration parameter is higher than power consumption corresponding to the local CDRX configuration parameter, but the use status of the UE 10 does not meet the condition for enabling the local CDRX configuration parameter, the UE 10 listens to the PDCCH based on the network-side CDRX configuration parameter. For details, refer to the foregoing step S605. Details are not described herein again.

S711: Determine whether network congestion occurs on the UE 10.

After listening to the PDCCH based on the network-side CDRX configuration parameter, the UE 10 may determine whether network congestion occurs on the UE 10. If the UE 10 determines that network congestion occurs on the UE 10, it indicates that listening to the PDCCH based on the network-side CDRX configuration parameter is not suitable for a current use status of the UE 10. In this case, go to step S703. Otherwise, repeat step S711 to continue determination.

It may be understood that for a manner in which the UE 10 determines whether network congestion occurs on the UE 10, refer to the descriptions of the foregoing step S607. Details are not described herein again.

According to the method provided in embodiments of this application, when not receiving the network-side CDRX configuration parameter sent by the network-side device 20, the UE 10 can periodically suspend listening to the PDCCH between the UE 10 and the network-side device 20 based on the local CDRX configuration parameter. This helps reduce power consumption of the UE 10 and improve battery life of the UE 10. In addition, if network congestion occurs on the UE 10 after the UE 10 uses the local CDRX configuration parameter, the UE 10 may alternatively adjust the local CDRX configuration parameter, for example, increasing a ratio of an OD timer to an LCD, decreasing an LCD, or increasing a ratio of an OD timer to an IAT, to avoid affecting normal use of the UE 10 by the user and help improve user experience. In addition, if power consumption corresponding to the network-side CDRX configuration parameter is higher than power consumption corresponding to the local CDRX configuration parameter, or congestion occurs on the UE 10 after the UE 10 listens to the PDCCH based on the network-side CDRX configuration parameter, the UE 10 may alternatively switch to listening to the PDCCH based on the local CDRX configuration parameter. This helps further reduce power consumption of the UE 10 and improve user experience.

Further, an embodiment of this application further provides a communication control apparatus 30. The apparatus may listen to a PDCCH based on a local CDRX configuration parameter of UE based on the communication control method provided in the foregoing embodiments.

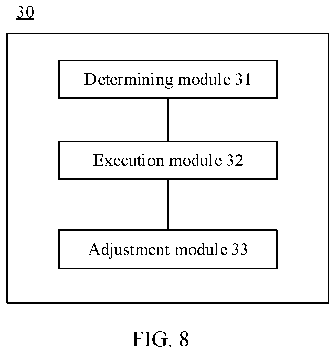

Specifically, FIG. 8 is a diagram of a structure of the communication control apparatus 30 according to some embodiments of this application.

As shown in FIG. 8, the communication control apparatus 30 includes a determining module 31, an execution module 32, and an adjustment module 33.

The determining module 31 is configured to: determine whether a use status of the UE meets a condition for enabling a local CDRX configuration parameter; determine a use scenario of the UE; and when determining whether the use status of the UE meets the condition for enabling the local CDRX configuration parameter, send an instruction for listening to the PDCCH based on the local CDRX configuration parameter to the CDRX execution module 33. For details, refer to the foregoing step S403, step S503, step S603, and step S703. Details are not described herein again.

For example, the determining module 31 is configured to: determine whether the UE is in the foregoing low-delay scenario; determine whether the UE is in a heavy-traffic scenario; and determine whether a performance mode is enabled for the UE. In addition, when determining that the UE is not in the low-delay scenario, is not in the heavy-traffic scenario, and performance is not enabled, the determining module 31 may further send the instruction for listening to the PDCCH based on the local CDRX configuration parameter to the CDRX execution module 33.

In some embodiments, the determining module 31 may further include a preset application maintenance submodule (not shown). The preset application maintenance submodule may be configured to add an application to a preset application or remove an application from a preset application based on an operation of a user. Therefore, when a foreground application run by the UE includes the application added by the user, the determining module 31 may determine that the use status of the UE does not meet the condition for enabling the local CDRX configuration parameter.

In some embodiments, the determining module 31 may be further configured to: when the UE listens to the PDCCH based on the local CDRX configuration parameter, determine whether network congestion occurs on the UE; and when determining that network congestion occurs on the UE, send an instruction for adjusting the local CDRX configuration parameter to the adjustment module 33.

In some embodiments, the determining module 31 may be further configured to: determine an application scenario of the UE; and send, to the execution module 32, an instruction for listening to the PDCCH based on a local CDRX configuration parameter corresponding to the determined application scenario. For details, refer to the foregoing step S504 and step S507. Details are not described herein again.

In some embodiments, the determining module 31 may be further configured to: when the UE listens to the PDCCH based on a network-side CDRX configuration parameter, determine whether network congestion occurs on the UE; and when determining that network congestion occurs on the UE, send the instruction for listening to the PDCCH based on the local CDRX configuration parameter to the execution module 32. For details, refer to the foregoing step S607, step S705, and step S711. Details are not described herein again.

In some embodiments, the determining module 31 may be further configured to: when the UE receives the network-side CDRX configuration parameter, determine whether power consumption corresponding to the network-side CDRX configuration parameter is higher than power consumption corresponding to the local CDRX configuration parameter. For details, refer to the foregoing step S708. Details are not described herein again.

For example, in some embodiments, a function of the determining module 31 may be implemented by an application processor of the UE.

The execution module 32 is configured to: respond to the instruction, sent by the determining module 31, for listening to the PDCCH based on the local CDRX configuration parameter, or based on the local CDRX configuration parameter sent by the adjustment module 33; and listen to the PDCCH based on the local CDRX configuration parameter. For details, refer to the foregoing step S404, step S604, step S608, step S704, and step S706. Details are not described herein again.

For example, in some embodiments, a function of the execution module 32 may be implemented by a baseband processor of the UE.

It may be understood that in some embodiments, when the UE receives the network-side CDRX configuration parameter from the network-side device, the execution module 32 may further listen to the PDCCH based on the network-side CDRX configuration parameter.

The adjustment module 33 is configured to: adjust the local CDRX configuration parameter in response to the instruction, sent by the determining module, for adjusting the local CDRX configuration parameter; and send an instruction for listening to the PDCCH based on the adjusted local CDRX configuration parameter to the execution module 32. For details, refer to the foregoing step S608 and step S706. Details are not described herein again.

In some embodiments, when the determining module 31 determines to listen to the PDCCH based on the adjusted local CDRX configuration parameter, if network congestion does not occur on the UE, the adjustment module 33 may be further configured to update the local CDRX configuration parameter stored in the UE to the adjusted CDRX configuration parameter.

For example, in some embodiments, a function of the adjustment module 33 may be implemented by the application processor and/or the baseband processor of the UE.

According to the communication control apparatus 30, when not receiving the network-side CDRX configuration parameter sent by the network-side device, the UE may periodically suspend listening to the PDCCH between the UE and the network-side device based on the local CDRX configuration parameter. This helps reduce power consumption of the UE and improve battery life of the UE. In addition, if network congestion occurs on the UE after the UE uses the local CDRX configuration parameter, the UE may alternatively adjust the local CDRX configuration parameter, for example, increasing a ratio of an OD timer to an LCD in the local CDRX configuration parameter, decreasing an LCD, or increasing a ratio of an OD timer to an IAT, to avoid affecting normal use of the UE by the user and help improve user experience. In addition, if power consumption corresponding to the network-side CDRX configuration parameter is higher than power consumption corresponding to the local CDRX configuration parameter, or congestion occurs on the UE after the UE listens to the PDCCH based on the network-side CDRX configuration parameter, the UE may alternatively switch to listening to the PDCCH based on the local CDRX configuration parameter. This helps further reduce power consumption of the UE and improve user experience.

It may be understood that a structure of the communication control apparatus 30 shown in FIG. 8 is merely an example. In some other embodiments, the communication control apparatus 30 may alternatively include more or fewer modules, or a combination of or splits from some modules. This is not limited herein.

The following uses an example in which UE 10 is a mobile phone 10 to describe a structure of an electronic device to which the communication control method provided in embodiments of this application is applicable.

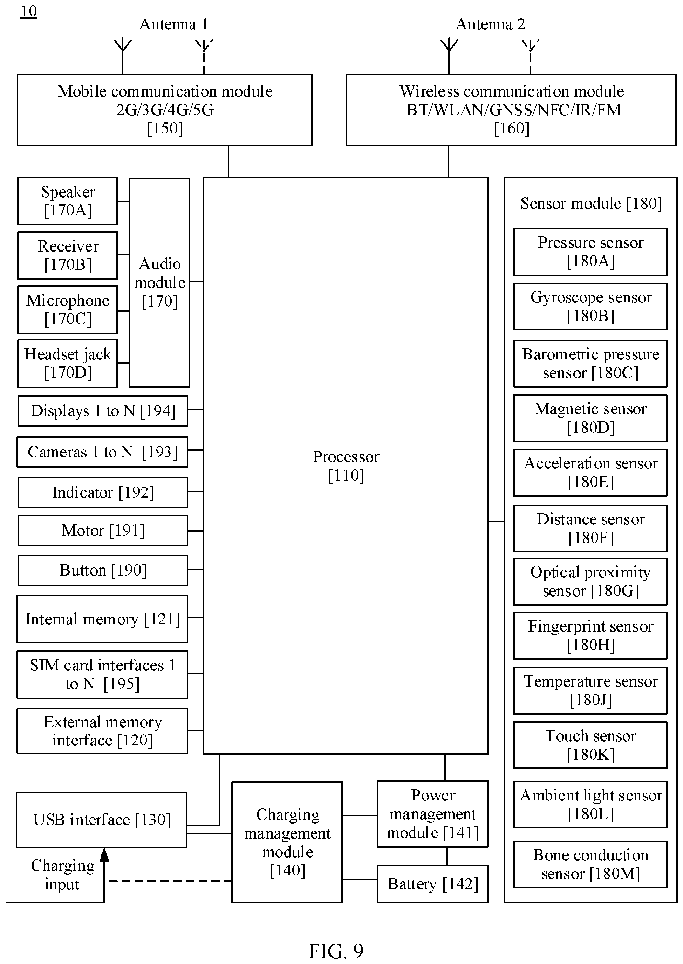

Specifically, FIG. 9 is a diagram of a structure of the mobile phone 10 according to some embodiments of this application.

As shown in FIG. 9, the mobile phone 10 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency. In some embodiments, the processor 110 may invoke and execute instructions that correspond to the communication control method provided in embodiments of this application and that are stored in the memory, to implement the communication control method provided in embodiments of this application.

In particular, in some embodiments, the baseband processor may listen to a PDCCH based on a local CDRX configuration parameter.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 10, or may be configured to transmit data between the mobile phone 10 and a peripheral device, or may be configured to connect to a headset for playing audio by using the headset. The interface may be further configured to connect to another electronic device like an AR device.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 10 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a wireless communication solution that is applied to the mobile phone 10 and that includes 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. Particularly, in some embodiments, when the mobile phone 10 suspends listening to the PDCCH, a modem may be set to be in a sleep mode, to reduce power consumption of the mobile phone 10.

The wireless communication module 160 may provide a wireless communication solution that is applied to the mobile phone 10 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (Near Field Communication, NFC), an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

The mobile phone 10 implements a display function by using the GPU, the display 194, the application processor, and the like. The GPU is a microprocessor for image processing, and is connected to the display 194 and the application processor. The GPU is configured to: perform mathematical and geometric computation; and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 10 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 10 may include one or N cameras 193, where N is a positive integer greater than 1.

The external memory interface 120 may be configured to connect to an external storage card, for example, a micro SD card, to extend a storage capability of the mobile phone 10. The external memory card communicates with the processor 110 through the external memory interface 120, to implement a data storage function. For example, files such as music and videos are stored in the external storage card.

The internal memory 121 may be configured to store computer-executable program code, where the executable program code includes instructions, for example, the memory 103. The internal memory 121 may include a program storage area and a data storage area. The program storage area may store an operating system, an application (for example, a wallet application 11A or a wallet application TA 12A) required by at least one function, and the like. The data storage area may store data (for example, card information of the foregoing analog cards) created in a process of using the mobile phone 10, and the like. In addition, the internal memory 121 may include a high-speed random access memory, or may further include a nonvolatile memory, for example, at least one magnetic disk storage device, a flash memory, or a universal flash storage (universal flash storage, UFS). The processor 110 executes the instructions stored in the internal memory 121 and/or the instructions stored in the memory disposed in the processor 110, to perform various functional applications of the mobile phone 10.

The mobile phone 10 may implement an audio function such as music playing and recording by using the audio module 170, the speaker 170A, the receiver 170B, the microphone 170C, the headset jack 170D, the application processor, and the like.

The audio module 170 is configured to convert digital audio information into an analog audio signal for outputting, and is further configured to convert an analog audio input into a digital audio signal. The audio module 170 may be further configured to code and decode an audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 10 determines pressure intensity based on a change of the capacitance. When a touch operation is performed on the display 194, the mobile phone 10 detects intensity of the touch operation by using the pressure sensor 180A. The mobile phone 10 may also calculate a touch location based on a detection signal of the pressure sensor 180A.

The acceleration sensor 180E may detect values of accelerations in various directions (usually on three axes) of the mobile phone 10, and may detect a value and a direction of gravity when the mobile phone 10 is still. The acceleration sensor 180E may be further configured to identify a posture of the electronic device, and is used in an application such as switching between a landscape mode and a portrait mode or a pedometer.

The ambient light sensor 180L is configured to sense ambient light brightness. The mobile phone 10 may adaptively adjust brightness of the display 194 based on the sensed ambient light brightness. The ambient light sensor 180L may alternatively be configured to automatically adjust white balance during photographing. The ambient light sensor 180L may also cooperate with the optical proximity sensor 180G, to detect whether the mobile phone 10 is in a pocket, to avoid an accidental touch.

The fingerprint sensor 180H is configured to collect a fingerprint. The mobile phone 10 may use a feature of the captured fingerprint to implement fingerprint-based unlocking, application lock access, fingerprint-based photographing, fingerprint-based call answering, and the like.

The touch sensor 180K is also referred to as a "touch control device". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transfer the detected touch operation to the application processor, to determine a type of the touch event. A visual output related to the touch operation may be provided by using the display 194. In some other embodiments, the touch sensor 180K may be alternatively disposed on a surface of the mobile phone 10 at a location different from that of the display 194.

The bone conduction sensor 180M may obtain a vibration signal. **In** some embodiments, the bone conduction sensor 180M may obtain a vibration signal of a vibration bone of a human vocal-cord part. The bone conduction sensor 180M may alternatively be in contact with a body pulse, to receive a blood pressure beating signal.

The button 190 includes a power button, a volume button, and the like. The button 190 may be a mechanical button, or may be a touch button. The mobile phone 10 may receive a button input, and generate a key signal input related to a user setting and function control of the mobile phone 10.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

It may be understood that the structure of the mobile phone 10 shown in embodiments of this application does not constitute a specific limitation on the mobile phone 10. **In** some other embodiments of this application, the mobile phone 10 may include more or fewer components than those shown in the figure, or a combination of some components, or splits from some components, or a different component layout. The components shown in the figure may be implemented by hardware, software, or a combination of software and hardware.

Embodiments of a mechanism disclosed in this application may be implemented in hardware, software, firmware, or a combination of these implementations. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to inputting instructions to perform functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level procedural language or an object-oriented programming language, to communicate with the processing system. The program code may be alternatively implemented in an assembly language or a machine language when needed. Actually, the mechanisms described in this application are not limited to a scope of any particular programming language. **In** any case, the language may be a compiled language or an interpreted language.

**In** some cases, the disclosed embodiments may be implemented in hardware, firmware, software, or any combination thereof. The disclosed embodiments may be alternatively implemented by using instructions carried by or stored on one or more temporary or non-temporary machine-readable (for example, computer-readable) storage media, and the instructions may be read and executed by one or more processors. For example, the instructions may be distributed by using a network or another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine (namely, a computer)-readable form.

**In** the accompanying drawings, some structural or method features may be shown in a particular arrangement and/or order. However, it should be understood that such a particular arrangement and/or order may not be needed. **In** some embodiments, these features may be arranged in a manner and/or order different from those/that shown in the descriptive accompanying drawings. **In** addition, inclusion of the structural or method features in a particular figure does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. **In** addition, to highlight an innovative part of this application, a unit/module that is not closely related to resolving the technical problem provided in this application is not described in the foregoing device embodiments of this application. This does not mean that there are no other units/modules in the foregoing device embodiments.

It should be noted that in the examples and the specification of this patent, relational terms such as first and second are merely used to distinguish one entity or operation from another, and do not necessarily require or imply any such actual relationship or order between these entities or operations. Moreover, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without more limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A communication control method, applied to user equipment, wherein the method comprises:
establishing, by the user equipment, a first radio resource control connection to a network-side device;
determining that the user equipment does not receive a connected discontinuous reception configuration parameter from the network-side device; and
when a use status of the user equipment meets a first condition, periodically suspending listening to a physical downlink control channel based on a first parameter.

2. The method according to claim 1, wherein the first parameter is prestored in the user equipment.

3. The method according to claim 1, wherein the first condition comprises:
a performance mode is not enabled for the user equipment, a foreground application run by the user equipment does not comprise a preset application, and an amount of data transmitted by the user equipment within preset duration is less than a preset amount of data.

4. The method according to claim 1, wherein the first parameter comprises a long discontinuous reception cycle LCD, an on duration OD timer, and an inactivity timer IAT.

5. The method according to claim 4, wherein the periodically suspending listening to a physical downlink control channel based on a first parameter comprises:
periodically suspending listening to the physical downlink control channel by using the long discontinuous reception cycle LCD as a cycle, wherein duration for listening to the physical downlink control channel in each cycle is the on duration OD timer.

6. The method according to claim 4, further comprising:
during periodical suspension, based on the first parameter, of listening to the physical downlink control channel, detecting whether network congestion occurs on the user equipment; and
when network congestion occurs on the user equipment, switching to periodically suspending listening to the physical downlink control channel based on a second parameter, wherein
the second parameter meets at least one of the following conditions:
a ratio of an on duration OD timer to a long discontinuous reception cycle LCD in the second parameter is greater than a ratio of the on duration OD timer to the long discontinuous reception cycle LCD in the first parameter;
the long discontinuous reception cycle LCD in the second parameter is less than the long discontinuous reception cycle LCD in the first parameter; and
a ratio of the on duration OD timer to an inactivity timer IAT in the second parameter is greater than a ratio of the on duration OD timer to the inactivity timer IAT in the first parameter.

7. The method according to claim 6, wherein the first parameter is stored in the user equipment, and the method further comprises:
during periodical suspension, based on the second parameter, of listening to the physical downlink control channel, detecting that network congestion does not occur on the user equipment; and
updating the first parameter stored in the user equipment to the second parameter.

8. The method according to any one of claims 1 to 7, further comprising:
establishing, by the user equipment, a second radio resource control connection to the network-side device;
determining that the user equipment receives the connected discontinuous reception configuration parameter from the network-side device; and
when power consumption corresponding to the received connected discontinuous reception configuration parameter is higher than power consumption corresponding to the first parameter, and the use status of the user equipment meets the first condition, periodically suspending listening to the physical downlink control channel based on the first parameter.

9. The method according to any one of claims 1 to 7, further comprising:
establishing, by the user equipment, a third radio resource control connection to the network-side device;
determining that the user equipment receives the connected discontinuous reception configuration parameter from the network-side device;
periodically suspending listening to the physical downlink control channel based on the received connected discontinuous reception configuration parameter, and during periodic suspension, detecting whether network congestion occurs on the user equipment; and
when network congestion occurs on the user equipment, and the use status of the user equipment meets the first condition, periodically suspending listening to the physical downlink control channel based on the first parameter.

10. The method according to any one of claims 1 to 7, wherein the user equipment currently runs in a first application scenario, and the first parameter is a connected discontinuous reception configuration parameter corresponding to the first application scenario.

11. The method according to claim 10, wherein the method further comprises:
detecting that an application scenario of the user equipment is switched from the first application scenario to a second application scenario, and switching to periodically suspending listening to the physical downlink control channel based on a third parameter, wherein
the third parameter is a connected discontinuous reception configuration parameter corresponding to the second application scenario.

12. The method according to claim 11, wherein the first application scenario or the second application scenario is any one of the following application scenarios: a power saving mode scenario, a call scenario, a light traffic scenario, a sleep mode scenario, a display screen of the user equipment being turned off, a live broadcast scenario, a video scenario, a navigation scenario, and a web page browsing scenario.

13. An electronic device, comprising:
a memory, configured to store instructions executed by one or more processors of the electronic device; and
a processor, wherein the processor is one of the processors of the electronic device, and is configured to execute the instructions stored in the memory, to enable the electronic device to perform the following operations:
establishing a first radio resource control connection to a network-side device;
determining that the electronic device does not receive a connected discontinuous reception configuration parameter from the network-side device; and
when a use status of the electronic device meets a first condition, periodically suspending listening to a physical downlink control channel based on a first parameter.

14. The electronic device according to claim 13, wherein the first parameter is prestored in the memory.

15. The electronic device according to claim 13, wherein the first condition comprises:
a performance mode is not enabled for the electronic device, a foreground application run by the electronic device does not comprise a preset application, and an amount of data transmitted by the electronic device within preset duration is less than a preset amount of data.

16. The electronic device according to claim 13, wherein the first parameter comprises a long discontinuous reception cycle LCD, an on duration OD timer, and an inactivity timer IAT.

17. The electronic device according to claim 16, wherein the periodically suspending listening to a physical downlink control channel based on a first parameter comprises:
periodically suspending listening to the physical downlink control channel by using the long discontinuous reception cycle LCD as a cycle, wherein duration for listening to the physical downlink control channel in each cycle is the on duration OD timer.

18. The electronic device according to claim 13, wherein the processor is further configured to execute the instructions stored in the memory, to enable the electronic device to perform the following operations:
during periodical suspension, based on the first parameter, of listening to the physical downlink control channel, detecting whether network congestion occurs on the electronic device; and
when network congestion occurs on the electronic device, switching to periodically suspending listening to the physical downlink control channel based on a second parameter, wherein
the second parameter meets at least one of the following conditions:
a ratio of an on duration OD timer to a long discontinuous reception cycle LCD in the second parameter is greater than a ratio of the on duration OD timer to the long discontinuous reception cycle LCD in the first parameter;
the long discontinuous reception cycle LCD in the second parameter is less than the long discontinuous reception cycle LCD in the first parameter; and
a ratio of the on duration OD timer to an inactivity timer IAT in the second parameter is greater than a ratio of the on duration OD timer to the inactivity timer IAT in the first parameter.

19. The electronic device according to claim 18, wherein the processor is further configured to execute the instructions stored in the memory, to enable the electronic device to perform the following operations:
during periodical suspension, based on the second parameter, of listening to the physical downlink control channel, detecting that network congestion does not occur on the electronic device; and
updating the first parameter stored in the memory to the second parameter.

20. The electronic device according to any one of claims 13 to 19, wherein the processor is further configured to execute the instructions stored in the memory, to enable the electronic device to perform the following operations:
establishing a second radio resource control connection to the network-side device;
determining that the electronic device receives the connected discontinuous reception configuration parameter from the network-side device; and
when power consumption corresponding to the received connected discontinuous reception configuration parameter is higher than power consumption corresponding to the first parameter, and the use status of the electronic device meets the first condition, periodically suspending listening to the physical downlink control channel based on the first parameter.

21. The electronic device according to any one of claims 13 to 19, wherein the processor is further configured to execute the instructions stored in the memory, to enable the electronic device to perform the following operations:
establishing a third radio resource control connection to the network-side device;
determining that the electronic device receives the connected discontinuous reception configuration parameter from the network-side device;
periodically suspending listening to the physical downlink control channel based on the received connected discontinuous reception configuration parameter, and during periodic suspension, detecting whether network congestion occurs on the electronic device; and
when network congestion occurs on the electronic device, and the use status of the electronic device meets the first condition, periodically suspending listening to the physical downlink control channel based on the first parameter.

22. The electronic device according to any one of claims 13 to 20, wherein the electronic device currently runs in a first application scenario, and the first parameter is a connected discontinuous reception configuration parameter corresponding to the first application scenario.

23. The electronic device according to claim 22, wherein the processor is further configured to execute the instructions stored in the memory, to enable the electronic device to perform the following operations:
detecting that an application scenario of the electronic device is switched from the first application scenario to a second application scenario, and switching to periodically suspending listening to the physical downlink control channel based on a third parameter, wherein
the third parameter is a connected discontinuous reception configuration parameter corresponding to the second application scenario.

24. The electronic device according to claim 23, wherein the first application scenario or the second application scenario is any one of the following application scenarios: a power saving mode scenario, a call scenario, a light traffic scenario, a sleep mode scenario, a display of the electronic device being turned off, a live broadcast scenario, a video scenario, a navigation scenario, and a web page browsing scenario.

25. A readable storage medium, wherein the readable storage medium stores instructions, and when the instructions are executed on an electronic device, the electronic device is enabled to implement the communication control method according to any one of claims 1 to 12.

26. A computer program product, wherein when the computer program product runs on an electronic device, the electronic device is enabled to implement the communication control method according to any one of claims 1 to 12.
